# EUROPÄISCHE PATENTSCHRIFT

(11) **EP 3 054 192 B1**
(45) Veröffentlichungstag und Bekanntmachung des Hinweises auf die Patenterteilung: **12.10.2022**
(21) Anmeldenummer: 16161492.0
(22) Anmeldetag: 30.03.2012
(51) Int. Cl.: F16G 13/16

(54) **ENERGIEFÜHRUNGSKETTE MIT DEFORMIERBAREN GELENKELEMENTEN**
ENERGY GUIDE CHAIN WITH DEFORMABLE JOINT ELEMENTS
CHAINE PORTE-CABLES AVEC ELEMENTS D'ARTICULATION DEFORMABLES

(30) Priorität: 01.04.2011 DE 202011004785 U
(43) Veröffentlichungstag der Anmeldung: 10.08.2016
(62) Teilanmeldung aus: 12714608.2
(73) Patentinhaber: Igus GmbH, 51147 Köln (DE)
(72) Erfinder: BLASE, Günter, 51429 Bergisch Gladbach (DE); JAEKER, Thilo-Alexander, 53757 Sankt Augustin (DE)
(74) Vertreter: Lippert Stachow Patentanwälte Rechtsanwälte

(56) Entgegenhaltungen:
- WO-A1-02/086349
- DE-U1-202004 005 800

## Beschreibung

Die Erfindung betrifft allgemein eine Energieführungskette zur Führung von Kabeln, Schläuchen oder dergleichen. Insbesondere betrifft die Erfindung eine solche Energieführungskette mit mehreren Laschen, die zwei parallele und durch separate Querstege verbundene Laschensträngen bilden. Hierbei sind die Laschen mittels Gelenkverbindung gegeneinander abwinkelbar.

Eine derartige Energieführungskette ist beispielsweise aus dem deutschen Patent DE 35 31 066 der Anmelderin bekannt. Bei Energieführungsketten gemäß dem Prinzip aus DE 35 31 066 wird die Gelenkverbindung zwischen benachbarten Laschen durch auf halber Höhe der Lasche angeordnete Schwenkbolzen bzw. Schwenkzapfen und korrespondierende Ausnehmungen gebildet. Obwohl sich derartige Energieführungsketten sehr bewährt haben, weisen sie den Nachteil auf, dass die Gelenkverbindung aus Schwenkzapfen und entsprechender Lagerung aufgrund von Reibung trotz hoher Lebensdauer unvermeidbar einem gewissen Verschleiß unterliegt. Dieser Verschleiß kann bspw. zu einem gewissen Abrieb führen, welcher allgemein und insbesondere bei Produktion unter Reinraumbedingungen oder bei Lebensmittelherstellung unerwünscht ist.

Eine Weiterentwicklung zur Reduzierung des Verschleiß und Abriebs in Energieführungsketten ist aus der inter-nationalen Patentanmeldung WO 02/086349 A1 der Anmelderin bekannt. Hierbei wird die Gelenkverbindung zwischen benachbarten Laschen durch in Abwinkelungsrichtung der Kettenlaschen elastisch deformierbare Gelenkelemente gebildet. Bei der sehr verschleißarmen Energieführungskette gemäß WO 02/086349 hingegen sind die Laschen in beiden Strängen bezüglich der längs gerichteten Hauptebene der Energieführungskette spiegelsymmetrisch, d.h. die Laschen des einen Strangs sind zu denen des anderen Strangs gespiegelt und folglich verschieden. Somit erfordern diese spiegelsymmetrischen Kettenlaschen unterschiedliche Spritzgussformen zur Herstellung.

Es hat sich, trotz vielerlei Vorzüge und der erfolgreichen Verbreitung von Energieführungsketten nach WO 02/086349 A1 nun herausgestellt, dass die unterschiedliche Form in ungünstigen Fällen dazu führen kann, dass aufgrund von Herstellungstoleranzen in beiden Kettensträngen unterschiedliche Abwinkelungsbegrenzungen, unterschiedliches Spiel und insbesondere unterschiedliche Längen des Strangs entstehen können. Dies ist offensichtlich unerwünscht, insbesondere bei verhältnismäßig langen Ketten.

Es hat sich ferner gezeigt, dass das Zusammensetzen der Kettenlaschen und der Gelenkelemente gemäß WO 02/086349 A1, wobei benachbarte Laschen durch eine Art Presssitz mit den Gelenkelementen verbunden sind, relativ aufwendig bzw. verbesserungswürdig ist.

Aus der Offenlegungsschrift DE 10 2007 061 296 ist eine Energieführungskette bekannt, welche zur Reduzierung der Anzahl Bauteile bereichsweise spiegelsymmetrisch ausgeführte Module aus mehreren Außenlaschen sowie spiegelsymmetrisch ausgeführte Innenlaschen verwendet. Nachteilig ist hierbei die vorgeschlagene Verbindung der einstückig hergestellten Module in Kettenlängsrichtung. Letztere führt nämlich zu unterschiedlichen Formen an den Enden des linken und rechten Laschenstrangs sowohl am feststehenden als auch am bewegten Kettenende. Noch ausgeprägter ist das Problem unterschiedlicher Enden der Laschenstränge bei einer Energieführungskette gemäß der Offenlegungsschrift DE 10 2008 020 907. Hierin wird vorgeschlagen, die gesamte Kette aus nur einem einzigen kammartigen Modul mit Außenlaschen, Querstegen und Innenlaschen aufzubauen. Die gegeneinander versetzte Verschachtelung dieser kammartigen Module führt jedoch dazu, dass die zu befestigender Enden nicht nur unterschiedlich geformt, sondern zudem in Längsrichtung unterschiedlich weit versetzt sind.

Die DE 20 2004 005800 U1 zeigt eine Energieführungskette, die in einer Ausführungsform in jedem Laschenstrang ein bandförmiges, durchgehendes Gelenkelement aufweist.

### ALLGEMEINE BESCHREIBUNG DER VORLIEGENDEN ERFINDUNG (TEILANMELDUNG)

Eine Energieführungsketten nach WO 02/086349 A1 stellt für die vorliegend beanspruchte Erfindung den nächstliegenden Stand der Technik gemäß dem Oberbegriff aus Anspruch 1 dar.

Vom Stand der Technik ausgehend, liegt der vorliegenden Erfindung als eine erste technische Aufgabe das Ziel zugrunde, eine Energieführungskette mit den Vorzügen einer verschleißarmen Gelenkverbindung vorzuschlagen, welche ein einfaches aber sicheres Verbinden der einzelnen Laschen mit dem bzw. den Gelenkelementen ermöglicht.

Bei einer gattungsgemäßen Energieführungskette nach dem Oberbegriff aus Anspruch 1 wird diese erste Aufgabe erfindungsgemäß dadurch gelöst, dass das Gelenkelement mindestens ein erstes Schnappmittel umfasst, welches mit einem entsprechenden zweiten Schnappmittel der ersten Lasche von zwei benachbarten Laschen zusammenwirkt, wobei das erste und das zweite Schnappmittel eine Schnappverbindung bilden, welche das Gelenkelement an der ersten Lasche der zwei benachbarten Laschen in einer Querrichtung, d.h. in einer Richtung quer zur Längsrichtung der Energieführungskette sichert.

In jedem Laschenstrang ist dabei jeweils mindestens ein Gelenkelement vorgesehen, d.h. es können in jedem Laschenstrang mehrere Gelenkelemente vorgesehen sein.

Das Gelenkelement kann an der zweiten Lasche der zwei benachbarten Laschen befestigt sein, wobei die Schnappverbindung insbesondere zur Halterung der unmittelbar benachbarten Laschen aneinander und quer zur Längsrichtung dient.

Das Gelenkelement kann genau drei Laschen, vorzugsweise mindestens drei Laschen miteinander gelenkig verbinden. Es ist hierzu vorzugsweise in einer in Längsrichtung der Energieführungskette verlaufenden Längs-Mittelebene der Laschen angeordnet, welche dabei mit der neutralen Faser der Energieführungskette zusammenfällt.

Das Gelenkelement weist vorzugsweise verdickte Endbereiche auf, welche jeweils ein erstes Schnappmittel mit einem Schnapphaken umfassen. Dabei kann jeder Schnapphaken durch Einkerbungen quer zur Längsrichtung in den verdickten Endbereichen einstückig mit dem Gelenkelement gebildet sein, und einen Widerhaken aufweisen. Vorzugsweise hat jeder Endbereich, dem Widerhaken gegenüberliegend, einen einstückig mit dem Gelenkelement geformten Vorsprung, z.B. zum spielfreien Einrasten und/oder zur Vorgabe der Endlage in Querrichtung.

Ferner kann das Gelenkelement jeweils einem Endbereich mit Schnappmitteln gegenüberliegend einen Bereich mit einer quer erstreckten annähernd zylindrischen Verdickung aufweisen, wobei die Verdickung zur Befestigung an der anderen bzw. zweiten Lasche der beiden benachbarten Laschen dient.

Die Laschen können Anschlagflächen zur Begrenzung der Endlage mit größter Abwinkelung und/oder zur Begrenzung der Endlage mit geringster Abwinkelung aufweisen. Hierbei ist es vorteilhaft, wenn die Anschlagflächen an den Stirnseiten der ersten Lasche gekrümmt, z.B. konkav gekrümmt, sind. Entsprechend vorteilhaft ist es, wenn die zusammenwirkenden Anschlagflächen der zweiten Lasche kongruent gekrümmt, z.B. konvex kongruent gekrümmt, ausgebildet sind. Ein sanfter sich anschmiegender Anschlag wird hierbei dadurch erzielt, dass die Anschlagflächen an den Stirnseiten der ersten Lasche sowie die zusammenwirkenden Anschlagflächen an der zweiten Lasche jeweils mit gleicher Krümmung, bspw. gemäß einer Rollkurve, gekrümmt sind. In einer Ausführungsform mit zusätzlichen dritten und vierten Anschlagflächen sind auch diese vorzugsweise paarweise kongruent gekrümmt, jedoch mit stärkerer bzw. schärfer ausgeprägter Krümmung als die gekrümmten Anschlagflächen an den Stirnseiten der ersten Lasche. Die Krümmungen der Anschlagflächen sind bevorzugt gemäß einer Kurvenform gewählt, welche nicht nur ein flächiges Anschlagen vermeidet, sondern zudem sukzessives Anschmiegen zur erhöhten Stabilität im Anschlag ermöglicht.

Aufgrund der Schnappverbindung kann zur Materialeinsparung, lediglich jede zweite Lasche aus beiden Laschensträngen mittels eines oberen und eines unteren Querstegs verbunden sein. Die anderen Laschen, welche dazwischen liegen, können durch die Schnappverbindung an den mittels Querstegen verbundenen Laschen gehalten werden, insbesondere auch quer zur Längsrichtung.

Die separaten Gelenkelemente können bestimmungsgemäß aus einem elastisch deformierbaren ersten Kunststoff einstückig geformt sein. Die Gelenkelemente können z.B. im Spritzgussverfahren hergestellt sein. Dabei können die Laschen hingegen jeweils aus einem zweiten Kunststoff einstückig geformt sein, z.B. im Spritzgussverfahren, welcher im Vergleich zum ersten Kunststoff härter ist und den Laschen eine im Vergleich zum Gelenkelement deutlich höhere Festigkeit bzw. Steifigkeit gibt.

Die Gelenkelemente sollten eine maximale Breite haben, insbesondere an den Endbereichen und/oder an den Befestigungsbereichen, die im Wesentlichen der maximalen Breite der beiden Laschen entspricht und diese jedenfalls nicht überschreitet. Hierdurch wird die maximal mögliche Breite ausgenutzt, ohne dass die Gelenkelemente seitlich hervorstehen und Störkanten bilden.

Jedes Gelenkelement kann mindestens zwei plattenartige Rumpfbereiche aufweisen, die eine betragsmäßig deutlich geringere Materialstärke in diesem Bereich haben im Vergleich zur Breite und auch zur Länge des jeweiligen Rumpfbereichs. Entsprechend kann jedes Gelenkelement jeweils zwischen einem Endbereich und einem Befestigungsbereich einen plattenartigen Rumpfbereich aufweisen, der in Art einer elastisch deformierbaren Blattfeder wirkt um die gewünschte Verbiegung des Gelenkelements zu ermöglichen.

Zur Vermeidung von Längenunterschieden in den Laschensträngen kann gemäß einem weiteren Aspekt vorgesehen sein, dass sich in jedem Laschenstrang in Längsrichtung der Kette jeweils unterschiedliche Innenlaschen und Außenlaschen abwechseln. Hierbei sind sowohl die Innenlaschen als auch die Außenlaschen jeweils zu ihrer senkrecht zur Längsrichtung verlaufenden Höhen-Mittelebene spiegelsymmetrisch gestaltet. Dadurch können baugleiche Innenlaschen und baugleiche Außenlaschen in beiden Laschensträngen verwendet werden, welche jeweils für sich genommen in der gleichen Form hergestellt werden. Die in einer Form, insbesondere Spritzgussform, hergestellten Laschen eines Typs werden somit in beiden Laschensträngen verwendet. Im Ergebnis wirken sich eventuelle Toleranzen in beiden Strängen identisch und symmetrisch aus, so dass insbesondere keine Längenunterschiede mehr entstehen können. Ferner sieht die Lösung vor, die Gelenkverbindung zwischen benachbarten Laschen durch ein spiegelsymmetrisches Gelenkelement zu bilden, welches insbesondere gegenüberliegende Endbereiche aufweist, die bezüglich der Höhen-Mittelebene spiegelsymmetrisch ausgebildet sind. Diese Endbereiche dienen zur Befestigung bzw. Sicherung jeweils benachbarter Innen- und Außenlaschen in Längsrichtung der Kette. Indem auch die Verbindung benachbarter Laschen in Längsrichtung durchgängig spiegelsymmetrisch zur Höhen-Mittelebene gestaltet ist, werden Stränge erzielt die insgesamt bezüglich der längs gerichteten Hauptebene der Energieführungskette spiegelsymmetrisch sind. Somit weisen beide Stränge links und rechts, sowohl am feststehenden als auch am bewegten Kettenende, jeweils identische Abschlüsse zur Befestigung auf. Hierdurch wird unter anderem die Befestigung vereinfacht und die Zahl der erforderlichen Befestigungsteile auf nur eine Bauteilform verringert.

Die vorliegende Erfindung betrifft auch das erfindungsgemäße Gelenkelement für sich genommen nach Anspruch 14, insbesondere zur Verwendung in einer Energieführungskette nach dem Oberbegriff aus Anspruch 1.

Das gattungsgemäße Gelenkelement ist elastisch deformierbar ist, damit es mindestens zwei benachbarte Laschen einer Mehrzahl Laschen eines Laschenstrangs gelenkig so miteinander verbinden kann, dass die jeweils verbundenen Laschen in einer Abwinkelungsrichtung gegeneinander abwinkelbar sind. Es ist ferner als separates Bauteil ausgeführt ist das von den Laschen eines Laschenstrangs lösbar bzw. zerstörungsfrei trennbar ist. Das Gelenkelement hat einen plattenartigen Rumpfbereich, der in Art einer elastisch deformierbaren Blattfeder wirkt, um eine gewünschte Verbiegung des Gelenkelements zu ermöglichen.

Erfindungsgemäß ist vorgesehen, dass das Gelenkelement mindestens ein erstes Schnappmittel umfasst, zum Zusammenwirken mit einem entsprechenden zweiten Schnappmittel einer Lasche um eine Schnappverbindung zu bilden. Die Schnappverbindung kann, bei zusammengesetzter Energieführungskette, das Gelenkelement an dieser einen Lasche in einer Querrichtung quer zur Längsrichtung der Energieführungskette sichern und erlaubt. Die Schnappverbindung erlaubt einen einfachen und präzise positionierten Zusammenbau.

In einer bevorzugten Ausführungsform hat das Gelenkelement mindestens zwei verdickte Endbereiche, welche jeweils ein erstes Schnappmittel mit einem Schnapphaken umfassen. Dabei kann jeder Schnapphaken vorzugsweise durch Einkerbungen quer zur Längsrichtung in den verdickten Endbereichen einstückig mit dem Gelenkelement gebildet bzw. hergestellt sein und einen Widerhaken aufweisen. Ferner kann das Gelenkelement mindestens zwei Befestigungsbereiche aufweisen, die jeweils einem Endbereich gegenüberliegen. Jeder Befestigungsbereich kann eine quer erstreckte annähernd zylindrische Verdickung aufweisen die zur Befestigung an einer zweiten bzw. weiteren Lasche von zwei zu verbindenden Laschen.

In einer Weiterbildung hat das Gelenkelement mindestens zwei plattenartige Rumpfbereiche aufweist, die jeweils in Art einer elastisch deformierbaren Blattfeder wirken, und jeweils zwischen einem Endbereich mit Schnapphaken und einem Befestigungsbereich mit Verdickung angeordnet sind, wobei jeder Rumpfbereich eine Materialstärke hat die betragsmäßig deutlich geringer ist als die Breite und als die Länge des Rumpfbereichs. Aufgrund der Schnappverbindung lässt sich auch der in Art eines flexiblen Scharnierbands bzw. einer Blattfeder wirkende deformierbare Bereich des Gelenkelements in Bezug auf die zu verbindenden Laschen einfach und präzise in seiner Lage festlegen, insbesondere in Querrichtung.

### ALLGEMEINE BESCHREIBUNG DER ERFINDUNG GEMÄSS STAMMANMELDUNG

Vom Stand der Technik ausgehend, liegt der Erfindung gemäß der Stammanmeldung Nr. PCT/EP2012/055782 bzw. EP 12 714 608.2 als eine andere technische Aufgabe zugrunde, eine Energieführungskette mit den Vorzügen einer verschleißarmen Gelenkverbindung vorzuschlagen, welche zudem toleranzbedingte Unterschiede zwischen den gegenüberliegenden Ketten- bzw. Laschensträngen, insbesondere Längenunterschiede, zuverlässig vermeidet. Die nachfolgende allgemein beschriebene Erfindung ist nicht Gegenstand der beigefügten Patentansprüche. Ihre bevorzugten Merkmale, insbesondere in Bezug auf die Gelenkverbindung, sind jedoch ggf. als bevorzugte Merkmale mit der obenstehenden Beschreibung kombinierbar.

Bei einer gattungsgemäßen Energieführungskette wird diese weitere Aufgabe dadurch gelöst, dass sich in jedem Laschenstrang in Längsrichtung der Kette jeweils unterschiedliche Innenlaschen und Außenlaschen abwechseln. Hierbei sind sowohl die Innenlaschen als auch die Außenlaschen jeweils zu ihrer senkrecht zur Längsrichtung verlaufenden Höhen-Mittelebene spiegelsymmetrisch gestaltet. Dadurch können baugleiche Innenlaschen und baugleiche Außenlaschen in beiden Laschensträngen verwendet werden, welche jeweils für sich genommen in der gleichen Form hergestellt werden. Die in einer Form, insbesondere Spritzgussform, hergestellten Laschen eines Typs werden somit in beiden Laschensträngen verwendet. Im Ergebnis wirken sich eventuelle Toleranzen in beiden Strängen identisch und symmetrisch aus, so dass insbesondere keine Längenunterschiede mehr entstehen können. Ferner sieht die Lösung vor, die Gelenkverbindung zwischen benachbarten Laschen durch ein spiegelsymmetrisches Gelenkelement zu bilden, welches insbesondere gegenüberliegende Endbereiche aufweist, die bezüglich der Höhen-Mittelebene spiegelsymmetrisch ausgebildet sind. Diese Endbereiche dienen zur Befestigung bzw. Sicherung jeweils benachbarter Innen- und Außenlaschen in Längsrichtung der Kette. Indem auch die Verbindung benachbarter Laschen in Längsrichtung durchgängig spiegelsymmetrisch zur Höhen-Mittelebene gestaltet ist, werden Stränge erzielt die insgesamt bezüglich der längs gerichteten Hauptebene der Energieführungskette spiegelsymmetrisch sind. Somit weisen beide Stränge links und rechts, sowohl am feststehenden als auch am bewegten Kettenende, jeweils identische Abschlüsse zur Befestigung auf. Hierdurch wird unter anderem die Befestigung vereinfacht und die Zahl der erforderlichen Befestigungsteile auf nur eine Bauteilform verringert.

Bevorzugt wird das Gelenkelement in der in Längsrichtung verlaufenden Längs-Mittelebene der Laschen angeordnet. Dies erlaubt es bei geeigneter Gestaltung die Laschen auch um ihre Querachse gedreht einzusetzen. In einer solchen bevorzugten Ausführung unterscheiden sich die Innenlasche und die Außenlasche in ihrem Umriss in Seitenansicht, so dass je nach Anordnung eine andere Kurvenform der Kette möglich wird. Insbesondere unterscheiden sich Innen- und Außenlasche zumindest durch die unterschiedliche Gestaltung ihrer in Längsrichtung gegenüberliegenden Stirnseiten. Diese Stirnseiten bilden bei mindestens einer der beiden unterschiedlichen Laschentypen Anschlagflächen aus, welche zur Begrenzung sowohl der Endlage mit größter Abwinkelung als auch der Endlage mit geringster Abwinkelung dienen. Zur unterschiedlichen Begrenzung sind diese Anschlagflächen bezüglich der Längs-Mittelebene der Lasche asymmetrisch. Durch die Anordnung der Anschlagflächen an den Stirnseiten mindestens eines Laschentyps wird eine stabile Anordnung durch eine größtmögliche Überlappung zwischen Innen- und Außenlaschen gewährleistet. Zudem ermöglicht die asymmetrische Ausgestaltung gegenüber der Kettenlängsebene, die Umlenkrichtung der Kette durch Umdrehen der asymmetrischen Lasche um die Querachse nach Wunsch anzupassen.

In einer bevorzugten Ausführung weist die Lasche des zweiten Laschentyps Anschlagflächen auf, welche mit den asymmetrischen Anschlagflächen an den Stirnseiten der ersten Lasche zusammenwirken und bezüglich der Längs-Mittelebene in geringerem Maß asymmetrisch sind. Eine geringere Asymmetrie, verglichen mit den Anschlagflächen der ersten Lasche, ermöglicht es ebenfalls durch Umkehren der zweiten Lasche um die Querachse, eine zusätzliche allerdings feiner abstimmbare Einstellung der Schwenkbegrenzung oder der Vorspannung zu erzielen.

In einer bevorzugten Ausführung weisen Innenlaschen und Außenlaschen jeweils in Längsrichtung aneinander grenzende verdickte Mittenbereiche auf sowie hieran stirnseitig anschließende jeweils dünnere Überlappungsbereiche. Diese Überlappungsbereiche überlappen die Innen- und Außenlaschen in Längsrichtung. Hierbei wirken die Anschlagflächen an den Stirnseiten der ersten Lasche mit entsprechenden Anschlagflächen am verdickten Mittenbereich der zweiten Lasche zusammen. Ferner wirken vorzugsweise zusätzliche dritte und vierte Anschlagflächen an den Stirnseiten der zweiten Lasche mit entsprechenden Anschlagflächen am Mittenbereich der ersten Lasche zusammen. Durch eine entsprechende Verdoppelung der Anschlagflächen im inneren und im äußeren Bereich der Laschen wird die Stabilität der Kette in beiden Anschlagstellungen erhöht.

Es erweist sich als vorteilhaft, wenn die Anschlagflächen an den Stirnseiten der ersten Lasche gekrümmt, insbesondere konkav gekrümmt, sind. Entsprechend vorteilhaft ist es, wenn die zusammenwirkenden Anschlagflächen der zweiten Lasche kongruent gekrümmt, d.h. insbesondere konvex kongruent gekrümmt, ausgebildet sind. Ein sanfter sich anschmiegender Anschlag wird hierbei dadurch erzielt, dass die Anschlagflächen an den Stirnseiten der ersten Lasche sowie die zusammenwirkenden Anschlagflächen an der zweiten Lasche jeweils mit gleicher Krümmung, bspw. gemäß einer Rollkurve, gekrümmt sind. In der Ausführung mit zusätzlichen dritten und vierten Anschlagflächen sind auch diese vorzugsweise paarweise kongruent gekrümmt, jedoch mit stärkerer bzw. schärfer ausgeprägter Krümmung als die gekrümmten Anschlagflächen an den Stirnseiten der ersten Lasche. Die Krümmungen der Anschlagflächen sind bevorzugt gemäß einer Kurvenform gewählt, welche nicht nur ein flächiges Anschlagen vermeidet, sondern zudem sukzessives Anschmiegen zur erhöhten Stabilität im Anschlag ermöglicht.

Zur Befestigung der Querstege erweist es sich als vorteilhaft, wenn Innenlasche oder Außenlasche oder beide an ihrer oberen und unteren Schmalseite jeweils eine mittige Aussparung aufweisen, in welcher ein Halteschaft vorgesehen ist, der in Längsrichtung der Kette verläuft. Dies ermöglicht eine schwenkbare, scharnierartige Befestigung des Querstegs an der entsprechenden Lasche, beispielsweise mittels eines hierfür vorgesehenen Scharniers am Quersteg. Hierbei ist jeder Quersteg zumindest einseitig schwenkbar am entsprechenden Halteschaft befestigt, vorzugsweise jedoch beidseitig schwenkbar an gegenüberliegenden Halteschaften befestigt. Durch die Verwendung von solchen Lagerbolzen oder Halteschaften in den Schmalseiten wird das störende nach innen Rage bekannter Rastnasen vermieden.

Vorzugsweise wird zur schwenkbaren Befestigung von herkömmlichen bereits verfügbaren Querstegen als Adapter ein Schwenkhorn, als separates Bauteil, vorgesehen. Entsprechend separate Schwenkhörner bilden einen von obenstehender Problemlösung unabhängigen, weiteren Erfindungsaspekt. In einer bevorzugten Ausgestaltung hat ein solches Schwenkhorn einerseits einen scharnierartigen Griff zur schwenkbaren Lagerung am Halteschaft sowie andererseits eine zu den Querstegen passende Befestigung, z.B. zwei in Längsrichtung der Kette gegenüberliegende Rastvorsprünge zur Befestigung mittels Schnappverschluss am Quersteg. Diese Ausführung verhindert zudem ein Aufschwenken bei Öffnen des Schnappverschlusses und andererseits ein Öffnen des Schnappverschlusses beim Aufschwenken.

Bei Verwendung derartiger Schwenkhörner ist es vorteilhaft, am Halteschaft Rastmittel vorzusehen, welche mit dem Schwenkhorn zusammenwirken zum Einrasten in der aufgeklappten Stellung oder in der zugeklappten Stellung oder vorzugsweise in beiden Stellungen.

In einer von den oben genannten Aspekten unabhängigen bevorzugten Ausführung umfasst jedes Gelenkelement mindestens ein erstes Schnappmittel, welches mit einem entsprechenden zweiten Schnappmittel an einem der beiden Laschentypen zusammenwirkt. Hierbei bilden das erste und das zweite Schnappmittel eine Schnappverbindung zur Halterung des jeweils einen Laschentyps am anderen Laschentyp in Richtung quer zur Längsrichtung der Kette.

Bei dieser bevorzugten Ausführung mit Schnappverbindung ist es vorteilhaft zur Materialeinsparung, wenn lediglich jede zweite Lasche auf beiden Laschensträngen mittels eines oberen und eines unteren Querstegs verbunden ist. Die anderen Laschen, welche dazwischen liegen, können durch besagte Schnappverbindung an den mittels Querstegen verbundenen Laschen gehalten werden. In einer besonders einfachen Ausführung sind die Gelenkelemente als separate Bauteile ausgeführt, welche jeweils drei Laschen, insbesondere zwei Laschen ohne Querstege und eine dazwischen liegende Lasche mit Quersteg, verbinden. Alternativ können die Gelenkelemente auch an einem der beiden Laschentypen stirnseitig hervorstehend angeformt sein, insbesondere durch form- oder stoffschlüssiges Anspritzen. Bei als separate Bauteile ausgeführten Gelenkelementen wird es bevorzugt, wenn jedes Gelenkelement eine maximale Breite hat, die im Wesentlichen der maximalen Breite beider Laschentypen entspricht, diese jedoch nicht überschreitet. Hierdurch wird die maximal mögliche Breite ohne Überstand ausgenutzt. Zusätzlich kann das Gelenkelement in einem mittleren Bereich eine Verjüngung aufweisen. In dieser Verjüngung kann das Gelenkelement in Halterichtung der oben genannten Schnappverbindung an der mittleren der drei Laschen gehalten werden.

Gemäß einem weiteren unabhängigen Aspekt ist es vorteilhaft, wenn das Gelenkelement Dämpfungsfortsätze aufweist, die mit einem freien Ende zur Dämpfung zwischen zusammenwirkenden Anschlagflächen der Laschen hineinreichen können. Um das Anschmiegen bzw. Anschlagen der zusammenwirkenden Anschlagflächen nicht zu beeinträchtigen kann an einem der beiden Laschentypen jeweils eine Aussparung zur teilweisen oder ganzen Aufnahme des Dämpfungsfortsatzes vorgesehen werden.

Schließlich ist es zweckmäßig, wenn diejenige Lasche mit der größeren Asymmetrie im Seitenumriss als Außenlasche vorgesehen ist und diejenige Lasche mit geringerer Asymmetrie als Innenlasche vorgesehen ist.

### KURZE BESCHREIBUNG DER ZEICHNUNGEN

Weitere Einzelheiten, Vorteile und Merkmale der Erfindung lassen sich dem nachfolgenden Teil der Beschreibung entnehmen, in welchem ein Ausführungsbeispiel anhand der beigefügten Zeichnungen näher erläutert wird. Es zeigen
- Fig.1:: eine perspektivische Teilansicht der erfindungsgemäßen Energieführungskette;
- Fig.2:: verschiedene Ansichten gemäß Normalprojektion einer Innenlasche der Energieführungskette nach Fig.1;
- Fig.3:: verschiedene Ansichten gemäß Normalprojektion einer Außenlasche der Energieführungskette nach Fig.1;
- Fig.4:: eine Seitenansicht und eine Draufsicht eines erfindungsgemäßen Gelenkelements gemäß der vorliegenden Erfindung;
- Fig.5:: eine Vorderansicht und eine Seitenansicht eines Schwenkhorns zur schwenkbaren Befestigung der Querstege gemäß einem weiteren Aspekt der Erfindung; und
- Fig.6:: einen Querschnitt durch die Energieführungskette mit Schwenkhorn gemäß Fig.5 bei aufgeschwenktem oberem Quersteg.

### DETAILLIERTE BESCHREIBUNG EINES BEVORZUGTEN AUSFÜRHUNGSBEISPIELS ANHAND DER FIGUREN

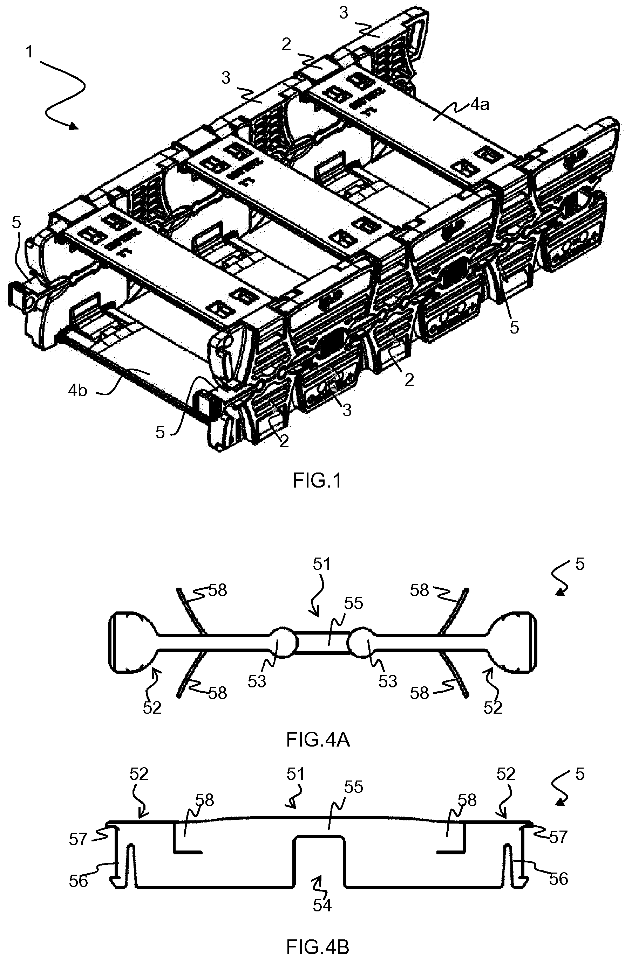

Fig.1 zeigt in perspektivischer Darstellung einen Teilbereich einer erfindungsgemäßen Energieführungskette, allgemein mit 1 bezeichnet. Die Energieführungskette 1 besteht aus einer Vielzahl gelenkig miteinander verbundenen Kettenlaschen 2, 3. Die Kettenlaschen 2, 3 sind zu zwei parallelen und durch obere und untere Querstege 4a, 4b lösbar verbundene Laschenstränge zusammengesetzt. Zwischen den Laschensträngen 2, 3 und den Querstegen 4a, 4b bildet die Energieführungskette 1 einen Hohlraum, welcher als Führungskanal beispielsweise für Kabel oder Schläuche dient. Durch den Satz Einzelteile bestehend aus zwei parallel gegenüberliegenden Laschen 2, 3 und zwei zugehörigen Querstegen 4a, 4b werden formstabile, verdreh- und torsionssteife Kettenglieder als kleinste sich wiederholende Ketteneinheit gebildet. Die dargestellte Energieführungskette 1 kann bogenförmig zur Bildung eines Untertrums, eines Umlenkbereichs und eines Obertrums verformt werden, bspw. um zwei relativ zueinander bewegliche Maschinenteile mit Energie- und/oder Datenleitungen zu verbinden.

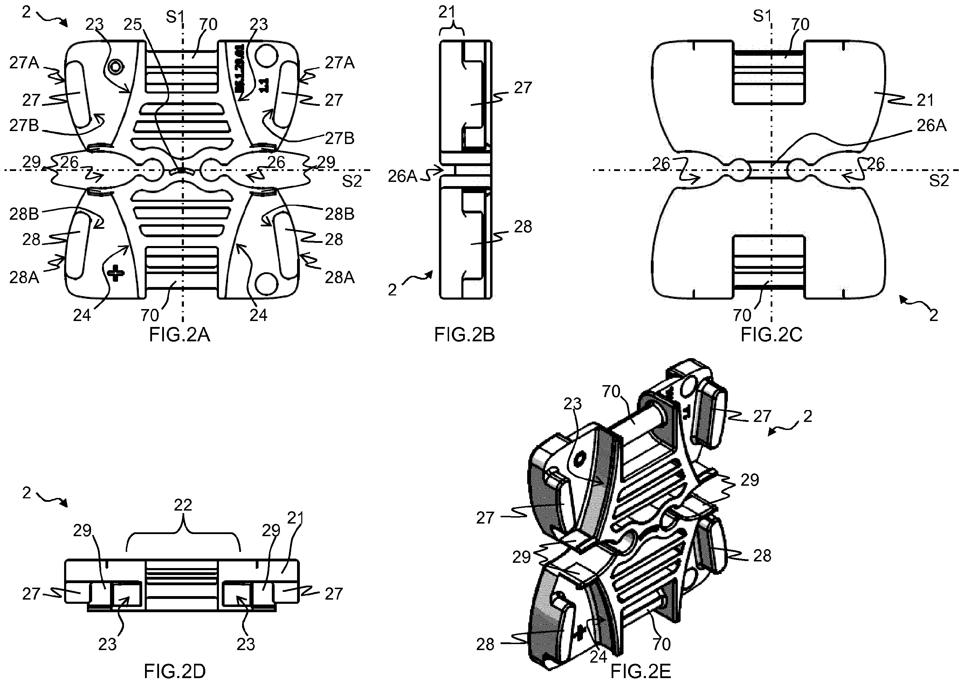

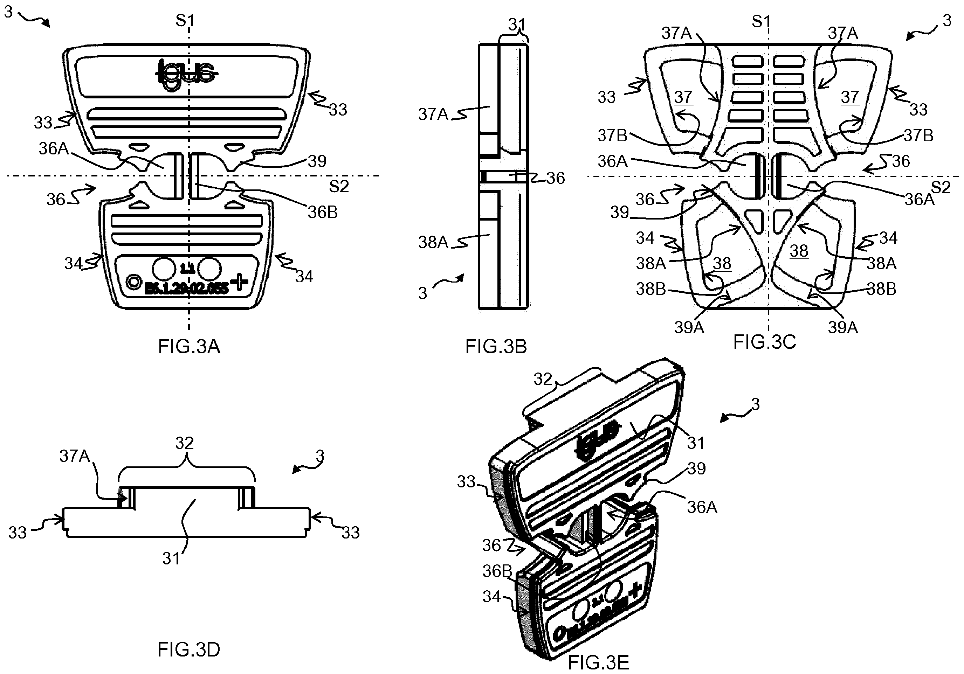

Wie aus Fig.1 ersichtlich, wechseln sich in jedem Laschenstrang in Längsrichtung der Kette 1 jeweils unterschiedlich gestaltete Innenlaschen 2 mit Außenlaschen 3 ab. In beiden Laschensträngen werden jedoch die gleichen Innenlaschen 2 und die gleichen Außenlaschen 3 verwendet. Wie aus Fig.2 und Fig.3 näher ersichtlich, ist jede Innenlasche 2 und jede Außenlasche 3 für sich genommen jeweils zu ihrer Höhen-Mittelebene S1, welche senkrecht zur Längsrichtung bzw. neutralen Faser der Energieführungskette 1 verläuft, spiegelsymmetrisch ausgebildet. Dementsprechend kann durch 180°-Drehung um die Höhen-Achse sowohl die Innenlasche 2 als auch die Außenlasche 3 jeweils im linken oder im rechten Laschenstrang, wie in Fig.1 gezeigt, verwendet werden.

Wie weiterhin in Fig.1 gezeigt sind die Gelenkverbindungen zwischen den sich abwechselnden Innen- und Außenlaschen 2, 3 durch ein Gelenkelement 5 gebildet. Wie in Fig.1 gezeigt, erstrecken sich die Gelenkelemente 5 vorzugsweise im Wesentlichen über die gesamte Breite der Laschen 2, 3 und schließen bündig an deren Seitenflächen innen und außen ab.

Das Gelenkelement 5 ist ein in Längsrichtung der Energieführungskette 1 erstrecktes, plattenartiges und vorzugsweise separates Bauteil. Das entsprechende Gelenkelement 5 ist in Fig.4 näher gezeigt. Entsprechend den Laschen 2, 3 ist auch das Gelenkelement 5 bezüglich der Höhen-Mittelebene S1 spiegelsymmetrisch ausgebildet. Es umfasst einen mittleren Bereich 51 sowie gegenüberliegende Endbereiche 52. Im gezeigten Ausführungsbeispiel verbindet das Gelenkelement 5 jeweils genau drei Laschen 2, 3 miteinander, hier jeweils zwei Außenlaschen 3 mit einer dazwischen liegenden Innenlasche 2. Zur Befestigung an der Innenlasche 2 weist das Gelenkelement 5 im mittleren Bereich 51 zwei quer erstreckte Verdickungen 53 auf. Die Verdickungen 53, welche zur Sicherung bzw. Befestigung der Innenlasche 2 in Längsrichtung der Kette 1 dienen, sind annähernd zylindrisch. Ferner hat das Gelenkelement 5 in seinem mittleren Bereich 51, wie am besten aus Fig.4b ersichtlich, eine Aussparung 54. Die Aussparung ist nur zu einer Seite hin offen und in Längsrichtung begrenzt durch die Verdickungen 53. Das Gelenkelement greift mit der Aussparung 54 formschlüssig in den mittleren Bereich der Innenlasche 2. Hierdurch wird eine zusätzliche Befestigung in Längsrichtung erzielt und zugleich anhand eines die Aussparung 54 einseitig begrenzenden Stegs 55 eine Sicherung in Richtung quer zur Längsrichtung, vorzugsweise gegen Verschiebung nach außen hin, gewährleistet. Zur Verbindung mit den beiden Außenlaschen 3 sind die gegenüberliegenden Endbereiche 52 des Gelenkelements 5 als quer liegende Verdickungen näherungsweise halbzylindrisch gestaltet. In den Endbereichen 52 sind Schnappmittel, insbesondere Schnapphaken 56 vorgesehen. Die Schnapphaken 56 sind durch Einkerbungen quer zur Längsrichtung, näherungsweise gleicher Tiefe wie die Aussparung 54, in den verdickten Endbereichen 52 gebildet. An der den Widerhaken der Schnapphaken 56 gegenüberliegenden Seite der Endbereiche sind einstückig mit dem Gelenkelement 5 geformte Vorsprünge 57 vorgesehen. Die Vorsprünge 57 dienen der spielfreien Einrastung der Schnapphaken 56, d.h. des Gelenkelements 5 an den Außenlaschen 3 und umgekehrt.

Gemäß Fig.4 sind die Gelenkelemente 5, genauer ihr plattenartiger Rumpf, mit einer betragsmäßig deutlich geringeren Materialstärke als der Betrag ihrer Breite und Länge ausgeführt. Aus geeignetem Kunststoff hergestellt wirken die Gelenkelemente 5 somit in Art eines flexiblen Scharnierbands bzw. einer Blattfeder. Somit üben die Gelenkelemente 5 nach Abbiegung in Abwinkelungsstellung elastische Rückstellkräfte auf die benachbarten Laschen 2,3 aus, so dass die Kette 1 dazu neigt, in ihre Ausgangsposition zurückgestellt zu werden. Das Gelenkelement 5 kann auch so ausgeführt sein, dass im Wesentlichen keine oder nur sehr geringe Rückstellkräfte erzeugt werden. Hierzu kann beispielsweise mittig zwischen einem Endbereich 52 und dem mittleren Bereich 51 eine Art dünnes Filmscharnier vorgesehen sein, so dass das Gelenkelement lediglich zur Längssicherung dient.

Somit ist das Gelenkelement 5 aus einem zur elastischen Deformierung (in der Ebene von Fig.4a) einerseits und zur Bildung der Schnapphaken 56 andererseits geeigneten Kunststoff einstückig geformt. Hierzu wird bevorzugt ein im Vergleich zum härteren Material der Laschen 2,3 besser geeigneter Kunststoff gewählt. Die kopfförmigen Endbereiche 52 zusammen mit den Verdickungen 53 und der Aussparung 54 im mittleren Bereich gewährleisten eine hohe Festigkeit der Verbindung zwischen Gelenkelement und Laschen 2, 3 in Zugrichtung.

Ferner ist, wie am besten aus Fig.4a ersichtlich, jedes Gelenkelement 5 mit spiegelsymmetrisch angeordneten Dämpfungsfortsätzen 58 versehen. Die Dämpfungsfortsätze 58 sind blattfederartig ausgebildet, d.h. mit deutlich geringerer Stärke als ihre Breite und Länge. Die Dämpfungsfortsätze 58 sind einstückig am Gelenkelement 5 angeformt bzw. mit diesem hergestellt, so dass sie jeweils flügelförmig in einem Winkel im Bereich zwischen 30° und 90° zur Längsachse des Gelenkelements 5 abstehen. Die Dämpfungsfortsätze 58 können eine andere Formgebung als die in Fig.4a abgebildete Bogenform aufweisen. Sie können beispielsweise wellenförmig, zick-zackförmig oder an ihren Enden mit Verdickungen ausgestaltet sein. Die Breite der Dämpfungsfortsätze 58 in Richtung quer zur Längsrichtung der Energieführungskette 1 ist geringer als die Breite des Gelenkelements 5. Die Fortsätze 58 sind symmetrisch zur Längs-Mittelebene S1 (s. Fig.2a) und auch symmetrisch zur Höhen-Mittelebene S2 (s. Fig.2a) angeordnet. Die Dämpfungsfortsätze 58 sind freitragend und haben zwischen ihrem freien Ende und dem Fußpunkt am Rumpf des Gelenkelements 5 eine (Kurven-)Länge die zwischen 5% und 25% der Höhe der Lasche 2,3 in der Höhen-Mittelebene beträgt. Die Dämpfungsfortsätze 58 dienen dazu, mit ihrem freien Ende in den Bereich zwischen zwei zusammenwirkenden Anschlagflächen benachbarter Innen- und Außenlaschen 2, 3 hineinzuragen, um den Anschlag abzudämpfen und somit die Geräuschentwicklung zu reduzieren. Die Dämpfungsfortsätze 58 wirken jedoch im Vergleich zum Rumpf des Gelenkelements 5 im Wesentlichen keine Rückstellkraft aus. Die obengenannten Merkmale des Gelenkelements sind grundsätzlich unabhängig von der erfindungsgemäßen Gestaltung der Laschenstränge gemäß nachfolgender Beschreibung und können auch in anderen Ketten vorteilhaft eingesetzt werden.

Figuren 2a-2e zeigen einen ersten Typ der sich abwechselnden Laschentypen der Kette 1 aus Fig.1, genauer eine Innenlasche 2. Als Innenlasche 2 wird hierbei diejenige Lasche verstanden, welche auch im Bereich der Überlappung mit der jeweils benachbarten Lasche dem Führungskanal 3 zugewandt ist, welcher durch die parallel angeordneten Kettenstränge und Querstege 4a, 4b gebildet ist. Die Innenlasche 2 hat eine im Wesentlichen schmetterlingsförmige Grundplatte 21, die zu ihrer senkrecht zur Längsrichtung verlaufenden Höhen-Mittelebene S1 spiegelsymmetrisch ausgebildet ist. Ein Mittelbereich 22 der Innenlasche 2 ist im Vergleich zur Grundplatte 21 dicker ausgebildet, wie am besten aus der perspektivischen Ansicht in Fig.2e ersichtlich. Dieser verdickte Mittelbereich 22 bildet jeweils ein Paar erster spiegelsymmetrischer Anschlagflächen 23 und ein Paar zweiter spiegelsymmetrischer Anschlagflächen 24. Die ersten und zweiten Anschlagflächen 23, 24 sind spiegelsymmetrisch zur Höhen-Mittelebene S1. Die ersten Anschlagflächen 23 können ferner spiegelsymmetrisch zu den zweiten Anschlagflächen 24 bezüglich der Längs-Mittelebene S2 ausgestaltet sein. Vorzugsweise sind die ersten und zweiten Anschlagflächen 23, 24 jedoch leicht asymmetrisch bezüglich der Längs-Mittelebene S2. Durch entsprechende leichte Asymmetrie kann durch 180°-Drehung um die Querachse (Schnittlinie zwischen den Mittelebenen S1 und S2) eine andere Begrenzung der Abwinkelung eingestellt werden, insbesondere kann auch eine Einstellung der Vorspannung erfolgen. Zur Unterscheidung der gewählten Einstellung ist an der Außenseite der Innenlasche 2 eine entsprechende Markierung 25 vorgesehen.

Zur Aufnahme und Befestigung des Gelenkelements 5 sind in der Innenlasche 2 stirnseitig gerichtete Ausnehmungen 26 vorgesehen. Die Ausnehmungen 26 sind mittig und spiegelsymmetrisch sowohl zur Höhen-Mittelebene S1 als auch zur Längs-Mittelebene S2. Der Endbereich zur Mitte hin jeder Ausnehmung 26 ist zum formschlüssigen Eingriff der Verdickungen 53 des Gelenkelements 5 ausgebildet. Der stirnseitige Bereich jeder Ausnehmung 26 hingegen öffnet sich mit zunehmendem Abstand vom Endbereich und ermöglicht die gewünschte Verbiegung des Gelenkelements 5. Eine mittige Längsaussparung 26A an der Innenseite, am besten aus Fig.2B ersichtlich, dient der Aufnahme des mittigen Stegs 55 des Gelenkelements. In die nach innen offenen Ausnehmungen 26 und Längsaussparungen 26A wird das Gelenkelement somit von der Innenseite der Innenlasche 2 her eingefügt.

Stirnseitig hat die Innenlasche 2 ein Paar erste Vorsprünge 27 und ein Paar zweite Vorsprünge 28, welche jeweils quer nach Außen vorstehen. Die Vorsprünge 27, 28 sind ebenfalls einstückig mit der Grundplatte 21 geformt. Die Anordnung der ersten und zweiten Vorsprünge 27, 28 entspricht bzgl. Symmetrien analog derjenigen der ersten und zweiten Anschlagflächen 23, 24. Weiterhin sind stegförmige Hilfsanschläge 29 vorgesehen, welche die Ausnehmungen 26 in Richtung parallel zur Ebene S1 begrenzen.

Fig.3a-3e zeigen eine Außenlasche 3 als komplementären Laschentyp der Kette aus Fig.1. Die Außenlasche 3 weist eine im Wesentlichen flächige Grundplatte 31 auf sowie einen gegenüber der Grundplatte 31 verdickten Mittelbereich 32. Die Grundplatte 31 bestimmt den Umriss in Seitenansicht, welcher sich deutlich vom symmetrischen Umriss der Grundplatte 21 der Innenlasche 2 unterscheidet. Der Umriss der Außenlasche 3 hat näherungsweise die Form eines gleichschenkligen symmetrischen Trapez, mit im Wesentlichen geraden oberen und unteren Schmalseiten bzw. Grundseiten parallel zur Längsrichtung, jedoch mit gekrümmten Schenkeln.

Die Außenlasche 3 nach Fig.3a-3e hat zur Begrenzung der Stellung mit geringster Abwinkelung ein Paar erste gegenüberliegende Anschlagflächen 33. Freies Tragen der Kette 1 wird also u.a. durch die ersten Anschlagflächen 33 gewährleistet. Die Anschlagflächen 33 sind durch die Stirnseiten der Außenlasche 3 ausgebildet und bezüglich der Höhen-Mittelebene S1 spiegelsymmetrisch ausgeführt. Die Außenlasche 3 hat weiterhin ein Paar zweite Anschlagflächen 34, die sich ebenfalls gegenüberliegen und spiegelsymmetrisch bezüglich der Höhen-Mittelebene S1 ausgeführt sind. Die zweiten Anschlagflächen 34 dienen der Begrenzung der Relativstellung zweier benachbarter Laschen 2, 3 mit größtmöglicher Abwinkelung. Wie aus Fig.3a und Fig.3c am besten ersichtlich, sind die ersten Anschlagflächen 33 und die zweiten Anschlagflächen 34 jedoch nicht spiegelsymmetrisch bezüglich der Längs-Mittelebene S2, sondern deutlich asymmetrisch hierzu. Die zweiten Anschlagflächen 34 sind gegenüber den ersten Anschlagflächen zur Mitte hin versetzt und leicht, näherungsweise um die Querachse (Schnittlinie zwischen Ebenen S1 und S2) gedreht. Je nach Drehstellung der Außenlasche 3 um die Querachse schlagen entweder die ersten Anschlagflächen 33 der Außenlasche 3 an den ersten Anschlagflächen 23 der Innenlasche 2 an oder aber an den zweiten Anschlagflächen 24 der Innenlasche 2. Entsprechend Umgekehrtes gilt analog für die zweiten Anschlagflächen 34 der Außenlasche 3. Somit kann durch Anordnung der Außenlasche 3 mit der kürzeren Schmalseite unten wie in Fig.3 gezeigt oder um 180° gedreht mit der kürzeren Schmalseite oben, die Umlenkrichtung der Energieführungskette 1 verändert werden. Auch sind in Längsrichtung variable Anordnungen möglich, so dass Ketten mit wellenförmiger, zick-zack-, o.ä. Kurvenform, je nach Anwendung einstellbar sind. Entsprechendes gilt analog für die Einstellung einer Vorspannung durch Anordnung der Innenlasche 2 mit den nur leicht asymmetrischen ersten und zweiten Anschlagflächen 23, 24. So wird nicht nur der dynamische Kurvenverlauf der Energieführungskette 1 durch geeignet gedrehte Anordnung der Innen- und Außenlaschen 2,3 eingestellt, sondern auch eine Feineinstellung ermöglicht. Eine Einstellung kann auch bezüglich der ruhend freitragenden Position der Energieführungskette 1, d.h. je nach Anwendung gerade, vorgespannt oder durchhängend, fein abgestimmt erfolgen.

Fig.3a-3e zeigen weiterhin ein Paar gegenüber liegender längsgerichteter Ausnehmungen 36, welche die kopfförmigen Endbereiche 52 des Gelenkelements 5 formschlüssig aufnehmen wie in FiG.1 gezeigt. Die Ausnehmungen 36 sind bezüglich beiden Ebenen S1 und S2 spiegelsymmetrisch geformt. Im zur Mitte gewandten Endbereich 36A sind die Ausnehmungen 36 jeweils im Längsschnitt an den Längsschnitt der Endbereiche 52 des Gelenkelements 5 angepasst. Zur Zusammenwirkung mit dem jeweiligen Schnapphaken 56 ist im Endbereich zur Außenseite hin eine Einschnappkante bzw. Schnappstufe 36B vorgesehen, welche der Schnapphaken 56 des eingreifenden Endbereichs 52 hintergreift. Durch Schnappstufe 36B und Schnapphaken 56 wird das Gelenkelement 5 an der Außenlasche 3 in Querrichtung gesichert und umgekehrt. Dadurch, dass die Außenlaschen 3 an den Innenlaschen 2 mittels einer Schnappverbindung 56, 36B in Querrichtung gesichert sind, wird die Einsparung von Querstegen 4a, 4b ermöglicht. In der Tat erübrigen sich, wie aus Fig.1 ersichtlich, Querstege 4a, 4b an Außenlaschen 3, so dass diese kosten- und gewichtssparend nur noch an den Innenlaschen 3 vorgesehen sind. Alternativ können die Querstege auch nur an den Außenlaschen vorgesehen werden.

Die Ausnehmungen 36 sind weiterhin mit im Längsschnitt stufenförmigen Hilfsanschlägen 39 versehen, welche entsprechend den ersten und zweiten Anschlagflächen 33, 34 asymmetrisch angeordnet sind. Die Hilfsanschläge 39 wirken mit den stirnseitigen Hilfsanschlägen 29 an den Ausnehmungen der Innenlasche 2 zusammen. Die stegförmigen Hilfsanschläge 29 dienen jedoch insbesondere der Begrenzung einer Relativverschiebung der zwischen verbundenen Laschen 2, 3 in Höhenrichtung parallel zur Ebene S2, d.h. senkrecht zur Längsrichtung, in gestreckter Stellung der Kette 1. Hierzu wirken die Hilfsanschläge 29 zusammen mit den oberen und unteren Begrenzungsflächen der Ausnehmungen 36, welche die Hilfsanschläge 29 bilden. Zur Begrenzung der Verschiebung senkrecht bei maximal abgewinkelter Stellung sind an der Außenlasche zusätzlich weitere Hilfsanschläge 39A spiegelsymmetrisch vorgesehen. Die weiteren Hilfsanschläge 39A sind hierzu so angeordnet, dass hieran die entsprechenden Schmalseiten der Innenlasche 2 anschlagen können.

Im Überlappungsbereich der Außenlasche 3, mit welchem diese seitlich der Innenlasche 2 überlappend gegenüberliegt, sind ein Paar erste Ausnehmungen 37 und ein Paar zweite Ausnehmungen 38 vorgesehen. Die Ausnehmungen 37, 38 sind näherungsweise sektorförmig zwischen den ersten bzw. zweiten Anschlagflächen 33, 34 und dem verdickten Mittenbereich 32 zur Innenseite offen. Die ersten Ausnehmungen 37 sowie auch die zweiten Ausnehmungen 38 sind jeweils paarweise spiegelsymmetrisch zur Höhen-Mittelebene S1. In die Ausnehmungen 37, 38 greifen bei zusammengesetztem Strang jeweils die ersten Vorsprünge 27 bzw. die zweiten Vorsprünge 28 ein. Die Höhe des freien Querschnitts der Ausnehmungen 37, 38 nimmt hierbei vorzugsweise zu den Anschlagflächen 33, 34 hin ab bis zum Betrag der entsprechenden Höhe der Vorsprünge 27, 28, wodurch der Umlenkbogen der Kette 1 stabilisiert wird. Durch die Ausnehmungen 37, 38 und die hierin eingreifenden Vorsprünge 27, 28 wird auch die Verschiebung senkrecht zur Längsrichtung der Kette begrenzt, zusammen mit den Hilfsanschlägen 29, 39A.

Fig.3c zeigt weiter Paare aus dritten und vierten Anschlagflächen 37A, 38A, welche jeweils zur Höhen-Mittelebene S1 hin die Ausnehmungen 37, 38 begrenzen. Wie insbesondere aus Vergleich der Draufsicht und Isometrie nach Fig.3d bzw. Fig.3e mit der Rückansicht nach Fig.3c ersichtlich, sind die dritten und vierten Anschlagflächen 37A, 38A jeweils stirnseitig durch den verdickten Mittelbereich 32 gebildet. Der Mittelbereich 32 hat zur Verstärkung zwischen den Anschlagflächen 37A, 38A eine Art Rippengestell mit mehreren Längs- und einer mittigen Senkrechtrippe, wie in Fig.3c gezeigt.

Die dritten Anschlagflächen 37A sind, bezüglich der ersten Anschlagflächen 33, ebenfalls zur Höhen-Mittelebene S1 spiegelsymmetrisch jedoch zur Mitte der Außenlasche 3 hin versetzt. Entsprechendes gilt analog für die vierten Anschlagflächen 38A in Bezug auf die zweiten Anschlagflächen 34. In gleichem Maße wie die ersten und zweiten Anschlagflächen 33, 34 sind auch die dritten und vierten Anschlagflächen 37A, 38A asymmetrisch zur Längs-Mittelebene S2. Die dritten und vierten Anschlagflächen 37A, 38A wirken zusammen mit dritten und vierten Anschlagflächen 27A, 28A an den Stirnflächen der Innenlasche 2 im Bereich der Vorsprünge 27, 28. Die dritten und vierten Anschlagflächen 27A, 28A; 37A, 38A begrenzen somit ebenfalls - je nach Orientierung bezüglich der Querachse - entweder die größtmögliche oder die geringste Abwinkelung zwischen benachbarten Laschen 2, 3.

In dem Endbereich der dritten und vierten Anschlagflächen 37A, 38A zur Längs-Mittelebene S2 hin können flächige Aussparungen (nicht näher bezeichnet) mit geringer Tiefe vorgesehen werden, welche die Dicke der Dämpfungsfortsätze 58 der Gelenkelemente 5 vorzugsweise ganz aufnehmen können. Hierdurch wird eine Beeinträchtigung der Zusammenwirkung der gekrümmten Anschlagflächen 37A, 38A bzw. 27A, 28A ohne Verlust der gewünschten Zusatzdämpfung vermieden.

Wie aus dem Vergleich von Fig.2a mit Fig.3c hervorgeht, bilden die Fortsätze 27, 28 der Innenlasche 2 Paare aus fünften und sechsten Anschlagflächen 27B, 28B die - zur weiteren Vergrößerung des gesamten Anschlagflächenmaß - zusammen mit entsprechenden fünften und sechsten Anschlagflächen 37B, 38B der Außenlasche 3 wirken. Die fünften und sechsten Anschlagflächen 27B, 28B der Innenlasche 2 sind der Mittelebene S1 zugewandt. Die fünften und sechsten Anschlagflächen 37B, 38B der Außenlasche 3 begrenzen die Ausnehmungen 37 bzw. 38 gegenüberliegend den dritten und vierten Anschlagflächen 37A, 38A. Die Mittelbereiche 22, 32, die Fortsätze 27, 28 und die Ausnehmungen 37, 38 sind so ausgestaltet und angeordnet, dass in Anschlagstellung der zweiten Anschlagflächen 34 der Außenlasche 3 an den zweiten Anschlagflächen 24 der Innenlasche 2 auch die jeweiligen vierten Anschlagflächen 28A, 38A sowie auch die jeweiligen fünften Anschlagflächen 27B, 37B im Anschlag sind. Analog ist die Ausgestaltung so, dass in Anschlagstellung der ersten Anschlagflächen 33 der Außenlasche 3 an den ersten Anschlagflächen 23 der Innenlasche 2 auch die jeweiligen dritten Anschlagflächen 27A, 37A sowie auch die jeweiligen sechsten Anschlagflächen 28B, 38B im Anschlag sind. Insgesamt wird dadurch eine hohe Stabilität im jeweiligen Anschlag gewährleistet.

Wie ferner aus Fig.2a-2e und Fig.3a-3e ersichtlich, sind die ersten und zweiten Anschlagflächen 23, 24 der Innenlasche und die entsprechend zusammenwirkenden ersten und zweiten Anschlagflächen 33, 34 der Außenlasche gekrümmt ausgebildet. Um eine Drehung der Außenlasche 3 um 180° zu ermöglichen, ohne die Stabilität im Anschlag zu beeinträchtigen, ist die Krümmung der Anschlagflächen 23, 24; 33, 34 hierbei vorzugsweise identisch. Es werden vorzugsweise identische Krümmungen vorgesehen die nicht kreiszylindrisch sind, sondern ein sukzessives Anschmiegen der gekrümmten Anschlagflächen 23, 24; 33, 34 ermöglichen. Zweckmäßig kann bspw. Krümmung nach geeigneter Rollkurve bzw. einer Zykloiden sein. Entsprechend analog, ebenfalls identisch gekrümmt, jedoch mit schärfer ausgeprägter Krümmung, sind auch die dritten und vierten Anschlagflächen 37A, 38A der Außenlasche 3 und die dritten und vierten Anschlagflächen 27A, 28A der Innenlasche 2 identisch gekrümmt. Durch gekrümmte Anschläge lässt sich einerseits eine spielfreiere und stabilere Konfiguration im Anschlag erzielen. Insbesondere wird auch die Geräuschentwicklung vermindert, dadurch dass ein flächiges Anschlagen im eigentlichen Sinne vermieden wird. Zudem kann eine Art Zentrierwirkung in den Hauptebenen der Laschen 2,3 erreicht werden. Die fünften und sechsten Anschlagflächen 27B, 28B; 37A, 27B können gerade bzw. eben, wie in Fig.2a bzw. Fig.3c, oder auch analog zu den vorgenannten Anschlagflächen 23, 24; 33, 34 bzw. 27A, 28A; 37A, 38A mit geeigneter Krümmung gestaltet sein.

Die nachfolgend beschriebenen Merkmale eines Schwenkhorns als separates Verbindungselement für die Querstege 4a, 4b sind grundsätzlich unabhängig von der erfindungsgemäßen Gestaltung der Laschenstränge können auch in anderen Ketten vorteilhaft eingesetzt werden.

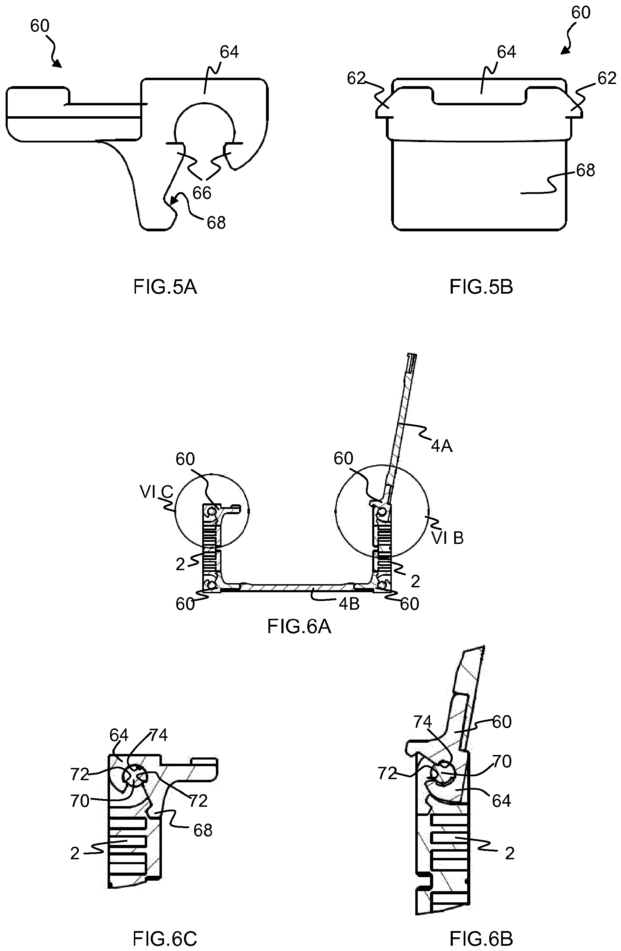

Fig.5a-5b zeigen ein als separates Bauteil ausgeführtes Schwenkhorn 60, das der einseitigen Befestigung eines Querstegs 4a, 4b an der gewünschten Lasche 2, 3 dient.

Das Schwenkhorn 60 hat im nach innen gewandten Endbereich einen herkömmlich gestalteten Verbinder mit Rastvorsprüngen 62. Stehen in Längsrichtung (bzgl. der Kette 1), d.h. quer zur Mittelachse eines angeschlossenen Querstegs 4a, 4b, hervor und sind symmetrisch angeordnet, wie aus Fig.5b ersichtlich. Der Verbinder für die Querstege 4a, 4b ist bekannter Bauart, bspw. gemäß Patentschrift DE 53 31 066 der Anmelderin, und dient somit zum Einrasten von herkömmlich ausgeführten Querstegen 4a, 4b.

Im nach außen gewandten Bereich hingegen hat das Schwenkhorn 60 eine scharnierartige Klaue 64, welche sich in Längsrichtung erstreckt, d.h. parallel zum Hervorstehen der Rastvorsprünge 62. Die Klaue 64 dient zur einrastenden jedoch schwenkbaren Befestigung an einer Lasche. Zur Rastverbindung hat die Klaue 64 nach innen gerichtete axial erstreckte Rastnasen oder Rasthaken 66.

Ein Lagerbolzen bzw. Halteschaft 70 zur Rastverbindung mit der Klaue 64 des Schwenkhorns 60 und des damit verbundenen Querstegs 4a, 4b, ist jeweils in einer Aussparung in der oberen und unteren Schmalseite der Innenlasche 2 vorgesehen, wie bspw. in Fig.2a-2e gezeigt. Zwei Halteschafte 70 sind jeweils symmetrisch zur Längs-Mittelebene S2 angeordnet, wodurch obere und untere Querstege schwenkbar mittels entsprechenden Schwenkhörnern nach Fig.5 befestigt werden können, wie in Fig.1 gezeigt. Alternativ oder zusätzlich könnten auch entsprechende Halteschafte 70 in den Außenlaschen angeordnet sein. Die Halteschafte 70 sind in mittigen Aussparungen im Mittelbereich 22 vorgesehen und erstrecken sich in der Längsrichtung. Wie ferner insbesondere aus Fig.2d ersichtlich, sind die Halteschafte 70 jeweils zwischen der Innenseite und der Außenseite der Innenlasche, vorzugsweise mittig, vorgesehen. Entsprechend stehen keine herkömmlich angeformten Rastnasen von den Laschen 2, 3 nach innen hervor, so dass bei gelösten Schwenkhörnern der Kanal in der Kette 1 leicht zugänglich wird und sich Leitungen beim Ein- und Ausführen nicht verhaken.

Vorzugsweise sind die Halteschafte 70 mit in Fig.6a-c näher gezeigten Rastmitteln versehen, welche mit dem Schwenkhorn zusammenwirken zur Rastung in der aufgeklappten Stellung (siehe Fig.6a) und in einer zugeklappten Stellung (siehe Fig.6b). Wie am besten aus Fig.6b-6c ersichtlich, sind die Halteschafte 70 im Querschnitt über einen gewissen Bogen mit einer zur Laschenmitte gewandten Abstufung bzw. Aussparung versehen. Letztere bildet axial erstreckte Kanten 72. Die beiden Rastnasen 66 des Schwenkhorns 60 hintergreifen diese Kanten 72 in der geschlossenen Stellung gemäß Fig.6C. Wie am besten aus Fig.6B ersichtlich, hat jeder Halteschaft 70 ferner eine nach oben bzw. unten gewandte zusätzliche axiale Rastkerbung 74, in welcher der innere Rasthaken 66 eingreift um den Quersteg 4a, 4b in offener d.h. aufgeschwenkter Stellung gemäß Fig.6a zu verrasten. Ferner zeigt Fig.5a auch den Zusatzanschlag 68 am Schwenkhorn 60. In geschlossener Stellung, am besten aus Fig.6c ersichtlich, liegt der Zusatzanschlag 68 formschlüssig an einem entsprechenden Gegenanschlag im Bereich der nach innen gewandten Ober- bzw. Unterkante des Mittelbereichs 22 der Lasche 2 an. Die Aussparungen in der Lasche 2, welche die Haltschafte 70 freigeben, sind jeweils entsprechend so dimensioniert, dass das Schwenkhorn 60 um den Halteschaft 70 schwenkbar ist. Der Mittelbereich 22 ist an seiner Ober- bzw. Unterkante, wie in Fig.6B gezeigt, nach innen hin und nach oben bzw. unten rampenartig ansteigend geformt, so dass auch eine Ecke des Schwenkhorns 60 hieran in aufgeschwenkter Stellung zusätzlich gehalten wird.

Das vorstehend beschriebene Schwenkhorn 60 dient somit als Adapter zur schwenkbaren Befestigung herkömmlicher, an sich nicht schwenkbar ausgelegter Querstege 4a, 4b, an den Kettenlaschen 2, 3. Auch andere als die vorstehend beschriebenen Laschen 2, 3 können mit zum Schwenkhorn 60 kompatiblen Halteschaften 70 versehen werden.

In der Praxis hat sich neben der vertikalen Spiegelsymmetrie der Bauteile die vorgeschlagene Krümmung der zusammenwirkenden Anschlagflächen 23, 33 bzw. 24, 34 etc., wie beispielhaft aus den Fig.2A und Fig.3A bzw. Fig.2B und Fig.3B erkennbar, als besonders vorteilhaft erwiesen. Das hierdurch erzielte sukzessive Anschmiegen von innen, d.h. von der Seite der Gelenkelemente 5, nach außen hin ermöglicht durch geringfügige werkstoffabhängige elastische Verformung der Laschen 2, 3 ein gegenseitiges Anpassen der Laschen 2, 3 und somit den Ausgleich herstellungsbedingter Toleranzen. Das Anschmiegen der gekrümmten Anschlagflächen 23, 33 bzw. 24, 34 etc. setzt sich progressiv fort bis ein möglichst vollflächiges Anliegen im Anschlag erzielt wird. Die geeignete Kurvenform der gewünschten durchgehenden bzw. stetigen und streng monotonen Krümmung kann durch Versuche empirisch ermittelt werden. Die Kurvenform ist insbesondere in Funktion vom gewählten Material der einzelnen Laschen 2,3 und insbesondere des Gelenkelements 5, zu wählen da diese u.a. von der Elastizität und der Gelenkkinematik abhängt.

### Energieführungskette mit deformierbaren Gelenkelementen

### Bezugszeichenliste

- 1: Energieführungskette
- 2: Innenlasche
- 3: Außenlasche
- 4a: Quersteg
- 4b: Quersteg
- 5: Gelenkelement
- 21: Grundplatte
- 22: Mittelbereich
- 23: erste Anschlagfläche
- 24: zweite Anschlagfläche
- 25: Markierung
- 26: Ausnehmung
- 26: Längsaussparung
- 27: erste Vorsprünge
- 28: zweite Vorsprünge
- 27A: dritte Anschlagfläche
- 28A: vierte Anschlagfläche
- 27B: fünfte Anschlagfläche
- 28B: sechste Anschlagfläche
- 29: Hilfsanschläge
- 31: Grundplatte
- 32: Mittelbereich
- 33: erste Anschlagfläche
- 34: zweite Anschlagfläche
- 36: Ausnehmung
- 36A: Ausnehmungsendbereich
- 36B: Raststufe
- 37: erste Vorsprünge
- 38: zweite Vorsprünge
- 37A: dritte Anschlagfläche
- 38A: vierte Anschlagfläche
- 37B: fünfte Anschlagfläche
- 38B: sechste Anschlagfläche
- 39: Hilfsanschlag
- 39A: weiterer Hilfsanschlag
- 51: mittlerer Bereich
- 52: Endbereich
- 53: Verdickung
- 54: Aussparung
- 55: Steg
- 56: Schnapphaken
- 57: Vorsprünge
- 58: Dämpfungsfortsätze
- 60: Schwenkhorn
- 62: Rastvorsprünge
- 64: Scharnierklaue
- 66: Rasthaken
- 68: Zusatzanschlag
- 70: Halteschaft
- 72: Kanten
- 74: Rastkerbung
- S1: Höhen-Mittelebene
- S2: Längs-Mittelebene

## Patentansprüche

1. Energieführungskette (1) zur Führung von Kabeln, Schläuchen oder dergleichen, umfassend
- zwei Laschenstränge, von denen jeder mehrere Laschen (2, 3) umfasst;
- separat lösbare Querstege (4a, 4b), welche die beiden Laschenstränge miteinander und parallel zueinander verbinden;
- in jedem Laschenstrang mehrere Gelenkelemente (5), wobei jedes Gelenkelement (5) elastisch deformierbar ist;
wobei in jedem Laschenstrang die Laschen (2, 3) in einer Längsrichtung der Energieführungskette (1) miteinander verbunden sind und mittels Gelenkverbindung gegeneinander abwinkelbar sind; und
wobei zur Gelenkverbindung jedes Gelenkelement (5) benachbarte Laschen (2, 3) gelenkig miteinander verbindet, sodass die jeweils verbundenen Laschen in einer Abwinkelungsrichtung gegeneinander abwinkelbar sind, und wobei jedes Gelenkelement (5) jeweils als separates Bauteil ausgeführt ist;
**dadurch gekennzeichnet, dass**
jedes Gelenkelement (5) mindestens ein erstes Schnappmittel (56) umfasst, welches mit einem entsprechenden zweiten Schnappmittel (36A, 36B) der ersten Lasche (3) von zwei benachbarten Laschen (2, 3) zusammenwirkt, wobei erstes und zweites Schnappmittel eine Schnappverbindung (56, 36A, 36B) bilden, welche das Gelenkelement (5) an der ersten Lasche (3) der zwei benachbarten Laschen (2, 3) in einer Querrichtung quer zu der Längsrichtung sichert.

2. Energieführungskette nach Anspruch 1, **dadurch gekennzeichnet, dass** jedes Gelenkelement (5) an der zweiten Lasche (2) der zwei benachbarten Laschen (2, 3) befestigt ist, wobei die Schnappverbindung (56, 36A, 36B) insbesondere zur Halterung dieser benachbarten Laschen (2, 3) aneinander quer zur Längsrichtung dient.

3. Energieführungskette nach Anspruch 1 oder 2, **dadurch gekennzeichnet, dass** jedes Gelenkelement (5) mindestens drei Laschen (2, 3) miteinander gelenkig verbindet und vorzugsweise in einer in Längsrichtung der Energieführungskette verlaufenden Längs-Mittelebene (S2) der Laschen (2,3) angeordnet ist.

4. Energieführungskette nach Anspruch 1, 2 oder 3, **dadurch gekennzeichnet, dass** jedes Gelenkelement (5) verdickte Endbereiche (52) aufweist, welche jeweils ein erstes Schnappmittel mit einem Schnapphaken (56) umfassen.

5. Energieführungskette nach Anspruch 4, **dadurch gekennzeichnet, dass** jeder Schnapphaken (56) durch Einkerbungen quer zur Längsrichtung in den verdickten Endbereichen (52) einstückig mit dem Gelenkelement (5) gebildet ist und einen Widerhaken aufweist,
wobei vorzugsweise jeder Endbereich (52), dem Widerhaken gegenüberliegend, einen einstückig mit dem Gelenkelement (5) geformten Vorsprung (57) aufweist.

6. Energieführungskette nach einem der Ansprüche 1 bis 5, insbesondere nach Anspruch 4 oder 5, **dadurch gekennzeichnet, dass** jedes Gelenkelement (5) jeweils einem Endbereich (52) gegenüberliegend einen Bereich (51) mit einer quer erstreckten annähernd zylindrischen Verdickung (53) aufweist, wobei die Verdickung (53) zur Befestigung an der zweiten Lasche (2) der zwei benachbarten Laschen (2, 3) dient.

7. Energieführungskette nach einem der Ansprüche 1 bis 6,
**dadurch gekennzeichnet, dass** die ersten Laschen (2) und die zweiten Laschen (3) gekrümmte Anschlagflächen (23; 33) zur Begrenzung der Endlage mit geringster Abwinkelung und/oder gekrümmte Anschlagflächen (24; 34) zur Begrenzung der Endlage mit größter Abwinkelung aufweisen.

8. Energieführungskette nach einem der Ansprüche 1 bis 7,
**dadurch gekennzeichnet, dass** jeweils lediglich jede zweite Lasche (2) aus beiden Laschensträngen mittels eines Paars umfassend einen oberen und einen unteren Quersteg (4a, 4b) verbunden ist; und
die ersten Laschen (3) durch die Schnappverbindung (56, 36A, 36B) mit dem Gelenkelement (5) quer zur Längsrichtung an den mittels Querstegen verbundenen zweiten Laschen (2) gehalten sind.

9. Energieführungskette nach einem der Ansprüche 1 bis 8,
**dadurch gekennzeichnet, dass** jedes Gelenkelement (5) aus einem elastisch deformierbaren ersten Kunststoff einstückig geformt ist, insbesondere im Spritzgussverfahren hergestellt ist; und dass
die Laschen (2, 3) jeweils aus einem zweiten Kunststoff einstückig geformt sind, insbesondere im Spritzgussverfahren hergestellt sind, welcher im Vergleich zum ersten Kunststoff härter ist.

10. Energieführungskette nach einem der Ansprüche 1 bis 9,
**dadurch gekennzeichnet, dass** jedes Gelenkelement (5) eine maximale Breite hat, insbesondere an den Endbereichen (52) und/oder an den Befestigungsbereichen (51), die im Wesentlichen der maximalen Breite der beiden Laschen (2, 3) entspricht und diese nicht überschreitet.

11. Energieführungskette nach einem der Ansprüche 1 bis 10,
**dadurch gekennzeichnet, dass** jedes Gelenkelement (5) mindestens zwei plattenartige Rumpfbereiche aufweist, die mit einer betragsmäßig deutlich geringeren Materialstärke als die Breite und als die Länge des Rumpfbereichs ausgeführt sind.

12. Energieführungskette nach Anspruch 6, **dadurch gekennzeichnet, dass** jedes Gelenkelement (5) jeweils zwischen einem Endbereich (52) und einem Befestigungsbereich (51) einen plattenartigen Rumpfbereich aufweist, der in Art einer elastisch deformierbaren Blattfeder wirkt.

13. Energieführungskette nach einem der vorhergehenden Ansprüche, **dadurch gekennzeichnet, dass** sich in jedem Laschenstrang in Längsrichtung der Kette jeweils unterschiedliche Innenlaschen (2) und Außenlaschen (3) abwechseln, wobei sowohl die Innenlaschen (2) als auch die Außenlaschen (3) jeweils zu ihrer senkrecht zur Längsrichtung verlaufenden Höhen-Mittelebene (S1) spiegelsymmetrisch gestaltet sind, so dass gleiche Innenlaschen und gleiche Außenlaschen in beiden Laschensträngen verwendbar sind, und die Gelenkelemente (5) gegenüberliegende Endbereiche (52) zur Sicherung benachbarter Innen- und Außenlaschen (2; 3) in Längsrichtung der Kette aufweisen, welche bezüglich der Höhen-Mittelebene (S1) spiegelsymmetrisch ausgebildet sind.

14. Gelenkelement (5) zur Verwendung in einer Energieführungskette, wobei
das Gelenkelement (5) elastisch deformierbar ist um mindestens zwei benachbarte Laschen (2, 3) einer Mehrzahl Laschen eines Laschenstrangs gelenkig so miteinander zu verbinden, dass die jeweils verbundenen Laschen in einer Abwinkelungsrichtung gegeneinander abwinkelbar sind;
das Gelenkelement (5) als separates Bauteil ausgeführt ist das von den Laschen (2, 3) eines Laschenstrangs lösbar ist; und wobei
das Gelenkelement (5) einen plattenartigen Rumpfbereich aufweist, der in Art einer elastisch deformierbaren Blattfeder wirkt, um eine gewünschte Verbiegung des Gelenkelements (5) zu ermöglichen,
**dadurch gekennzeichnet, dass**
das Gelenkelement (5) mindestens ein erstes Schnappmittel (56) umfasst, zum Zusammenwirken mit einem entsprechenden zweiten Schnappmittel (36A, 36B) einer Lasche (2, 3) um eine Schnappverbindung (56, 36A, 36B) zu bilden, welche, bei zusammengesetzter Energieführungskette (1), das Gelenkelement (5) an dieser Lasche (3) in einer Querrichtung quer zur Längsrichtung der Energieführungskette (1) sichert.

15. Gelenkelement (5) nach Anspruch 14, **dadurch gekennzeichnet, dass**
das Gelenkelement (5) mindestens zwei verdickte Endbereiche (52) aufweist, welche jeweils ein erstes Schnappmittel mit einem Schnapphaken (56) umfassen, wobei jeder Schnapphaken (56) vorzugsweise durch Einkerbungen quer zur Längsrichtung in den verdickten Endbereichen (52) einstückig mit dem Gelenkelement (5) gebildet ist und einen Widerhaken aufweist, und
das Gelenkelement (5) mindestens zwei Befestigungsbereiche (51) aufweist, die jeweils einem Endbereich (52) gegenüberliegen, wobei jeder Befestigungsbereich (51) eine quer erstreckte annähernd zylindrische Verdickung (53) aufweist zur Befestigung an einer zweiten Lasche (2) von zwei benachbarten Laschen (2, 3) .

16. Gelenkelement (5) nach Anspruch 15, **dadurch gekennzeichnet, dass** das Gelenkelement (5) mindestens zwei plattenartige Rumpfbereiche aufweist, die jeweils in Art einer elastisch deformierbaren Blattfeder wirken, und jeweils zwischen einem Endbereich (52) mit Schnapphaken (56) und einem Befestigungsbereich (51) mit Verdickung (53) angeordnet sind, wobei jeder Rumpfbereich eine Materialstärke hat die betragsmäßig deutlich geringer ist als die Breite und als die Länge des Rumpfbereichs.

## Claims

1. An energy guide chain (1) for guiding cables, hoses, or the like, comprising
- two link strands each comprising a plurality of links (2, 3) ;
- separately detachable transverse webs (4a, 4b) which connect the two link strands with each other and parallel to each other;
- in each link strand a plurality of joint elements (5), wherein each joint element (5) is elastically deformable; wherein in each link strand the links (2, 3) are connected to each other in a longitudinal direction of the energy guide chain and can be angled to one another by means of articulated connection; and
wherein, for the articulated connection, each joint element (5) connects adjacent links (2, 3) to each other in an articulated manner, so that the respective connected links can be angled to one another in an angling direction, and wherein each joint element (5) is implemented as a separate component in each case;
**characterized in that**
each joint element (5) comprises at least one first snap means (56) which cooperates with corresponding second snap means (36A, 36B) of the first link (3) of two neighboring links (2, 3), wherein first and second snap means build a snap connection (56, 36A, 36B) which secures the joint element (5) at the first link (3) of the two neighboring links (2, 3) in a transverse direction transverse to the longitudinal direction.

2. The energy guide chain according to claim 1, **characterized in that** each joint element (5) is fastened to the second link (2) of the two adjacent links (2, 3), wherein the snap connection (56, 36A, 36B) serves in particular to hold these adjacent links (2, 3) by each other transversely to the longitudinal direction.

3. The energy guide chain according to claim 1 or 2, **characterized in that** each joint element (5) connects at least three links (2, 3) to each other in an articulated manner and is preferably arranged in a longitudinal center plane (S2) of the link plates (2, 3) running in the longitudinal direction of the energy guide chain.

4. The energy guide chain according to claim 1, 2 or 3, **characterized in that** each joint element (5) has thickened end regions (52) each comprising a first snap means with a snap hook (56).

5. The energy guide chain according to claim 4, **characterized in that** each snap hook (56) is formed in one piece with the joint element (5) by notches transverse to the longitudinal direction in the thickened end regions (52) and has a barb, wherein preferably each end region (52) has a protrusion (57) formed in one piece with the joint element (5) opposite the barb.

6. The energy guide chain according to claims 1 to 5, in particular according to claim 4 or 5, **characterized in that** each joint element (5) has, opposite each end region (52), a region (51) with a transversely extending, approximately cylindrical thickened area (53), wherein the thickened area (53) serves for fastening to the second link (2) of the two adjacent links (2, 3).

7. The energy guide chain according to one of the claims 1 to 6, **characterized in that** the first links (2) and the second links (3) have curved stop faces (23; 33) for delimiting the end location with least angling and/or curved stop faces (24; 34) for delimiting the end location with greatest angling.

8. Energy guide chain according to any one of claims 1 to 7, **characterized in that** respectively only each second link (2) from both link strands is connected by means of a pair comprising an upper and a lower transverse web (4a, 4b); and the first links (3) are held by snap connection (56, 36A, 36B) with the joint element (5) transversely to the longitudinal direction on the second links (2) which are connected by means of transverse webs.

9. Energy guide chain according to any one of claims 1 to 8, **characterized in that** each joint element (5) is formed in one piece from an elastically deformable first plastic, in particular is produced by injection molding; and that the links (2, 3) are each formed in one piece, in particular by injection molding, from a second plastic, which is harder than the first plastic.

10. The energy guide chain according to one of claims 1 to 9, **characterized in that** each joint element (5) has a maximum width, in particular at the end regions (52) and/or at the fastening regions (51), which essentially corresponds to the maximum width of the two links (2, 3) and does not exceed this width.

11. The energy guide chain according to one of the claims 1 to 10, **characterized in that** each joint element (5) has at least two plate-like body regions which are embodied with a material thickness which is significantly smaller in terms of amount than the width and than the length of the body region.

12. The energy guide chain according to claim 6, **characterized in that** each joint element (5) has, in each case between an end region (52) and a fastening region (51), a plate-like body region which acts in the manner of an elastically deformable leaf spring.

13. The energy guide chain according to one of preceding claims, **characterized in that** in each link strand, respectively different internal links (2) and external links (3) alternate in the longitudinal direction of the chain, wherein both the internal links (2) and also the external links (3) are designed as mirror-symmetrical respectively to their vertical center plane (S1) extending perpendicularly to the longitudinal direction, so that identical internal links and identical external links are usable in both link strands, and the joint elements (5) have opposing end regions (52) for securing adjacent internal and external links (2; 3) in the longitudinal direction of the chain, which are implemented as mirror-symmetrical with respect to the vertical center plane (S1).

14. Joint element (5) for use in an energy guide chain, wherein
the joint element (5) is elastically deformable in order to connect at least two adjacent links (2, 3) of a plurality of links of a link strand to one another in an articulated manner in such a way that the respectively connected links can be angled with respect to one another in an angling direction;
the joint element (5) is embodies as a separate component which is detachable from the links (2, 3) of a link strand; and wherein
the joint element (5) has a plate-like body region which acts in the manner of an elastically deformable leaf spring to enable a desired bending of the joint element (5), **characterized in that**
the joint element (5) comprises at least a first snap means (56) for cooperation with a corresponding second snap means (36A, 36B) of a link (2, 3) to form a snap connection (56, 36A, 36B) which, when the energy guide chain (1) is assembled, secures the joint element (5) to this link (3) in a transverse direction transverse to the longitudinal direction of the energy guide chain (1).

15. Joint element (5) according to claim 14, **characterized in that**
the joint element (5) has at least two thickened end regions (52) each comprising a first snap means with a snap hook (56), wherein each snap hook (56) preferably is formed in one piece with the joint element (5) by notches transverse to the longitudinal direction in the thickened end regions (52) and has a barb, and
the joint element (5) has at least two fastening regions (51), each of which is opposite an end region (52), wherein each fastening region (51) has a transversely extending, approximately cylindrical thickened area (53) for fastening to a second link (2) of two adjacent links (2, 3).

16. A joint element (5) according to claim 15, **characterized in that** the joint element (5) comprises at least two plate-like body regions, each acting in the manner of an elastically deformable leaf spring, and each being arranged between an end region (52) with a snap hook (56) and a fastening region (51) with a thickened area (53), wherein each body region has a material thickness which is significantly smaller in amount than the width and than the length of the body region.

## Revendications

1. Chaîne porte-câbles (1) pour le guidage de câbles, de tuyaux ou similaires, comprenant
- deux brins d'éclisses, dont chacun comprend plusieurs éclisses (2, 3);
- des entretoises transversales (4a, 4b) détachables séparément, qui relient les deux brins d'éclisses entre eux et parallèlement l'un à l'autre;
- dans chaque brin d'éclisses, plusieurs éléments d'articulation (5), chaque élément d'articulation (5) étant élastiquement déformable;
dans chaque brin d'éclisses, les éclisses (2, 3) sont reliés entre eux dans une direction longitudinale de la chaîne porte-câbles (1) et peuvent être pliés les uns par rapport aux autres au moyen d'une liaison articulée; et
chaque élément d'articulation (5) reliant de manière articulée des éclisses (2, 3) voisines pour la liaison articulée, de sorte que les éclisses respectivement reliées peuvent être coudées l'une par rapport à l'autre dans une direction de coudage, et chaque élément d'articulation (5) étant réalisé respectivement comme composant séparé;
**caractérisée en ce que**
chaque élément d'articulation (5) comprend au moins un premier moyen d'encliquetage (56) qui coopère avec un deuxième moyen d'encliquetage correspondant (36A, 36B) de la première éclisse (3) de deux éclisses adjacentes (2, 3), le premier et le deuxième moyen d'encliquetage formant une liaison par encliquetage (56, 36A, 36B) qui fixe l'élément d'articulation (5) à la première éclisse (3) des deux éclisses adjacentes (2, 3) dans une direction transversale à la direction longitudinale.

2. Chaîne porte-câbles selon la revendication 1, **caractérisée en ce que** chaque élément d'articulation (5) est fixé à la deuxième éclisse (2) des deux pattes éclisses (2, 3), la liaison par encliquetage (56, 36A, 36B) servant notamment à maintenir ces éclisses adjacentes (2, 3) l'une contre l'autre transversalement à la direction longitudinale.

3. Chaîne porte-câbles selon la revendication 1 ou 2, **caractérisée en ce que** chaque élément d'articulation (5) relie de manière articulée au moins trois éclisses (2, 3) entre elles et est de préférence disposé dans un plan médian longitudinal (S2) des éclisses (2, 3) s'étendant dans le sens longitudinal de la chaîne porte-câbles.

4. Chaîne porte-câbles selon la revendication 1, 2 ou 3, **caractérisée en ce que** chaque élément d'articulation (5) présente des zones d'extrémité épaissies (52) qui comprennent chacune un premier moyen d'encliquetage avec un crochet d'encliquetage (56).

5. Chaîne porte-câbles selon la revendication 4, **caractérisée en ce que** chaque crochet d'encliquetage (56) est formé d'une seule pièce avec l'élément d'articulation (5) par des encoches transversales à la direction longitudinale dans les zones d'extrémité épaissies (52) et présente un barbillon, chaque zone d'extrémité (52) présentant de préférence, en face du barbillon, une saillie (57) formée d'un seul tenant avec l'élément d'articulation (85).

6. Chaîne porte-câbles selon l'une des revendications 1 à 5, en particulier selon la revendication 4 ou 5, **caractérisée en ce que** chaque élément d'articulation (5) présente, en face de chaque zone d'extrémité (52), une zone (51) avec une surépaisseur (53) approximativement cylindrique s'étendant transversalement, la surépaisseur (53) servant à la fixation sur la deuxième éclisse (2) des deux éclisses (2, 3) voisines.

7. Chaîne porte-câbles selon l'une des revendications 1 à 6, **caractérisée en ce que** les premières éclisses (2) et les deuxièmes éclisses (3) présentent des surfaces de butée incurvées (23; 33) pour limiter la position finale avec un coude le plus faible et/ou des surfaces de butée incurvées (24; 34) pour limiter la position finale avec un coude le plus grand.

8. Chaîne porte-câbles selon l'une des revendications 1 à 7, **caractérisée en ce que** seule une éclisse sur deux (2) des deux brins d'éclisses est reliée au moyen d'une paire comprenant une entretoise supérieure et une entretoise inférieure (4a, 4b); et
les premières éclisses (3) sont maintenues sur deuxièmes éclisses (2) reliées au moyen des entretoises par la liaison par encliquetage (56, 36A, 36B) avec l'élément d'articulation (5) transversalement à la direction longitudinale.

9. Chaîne porte-câbles selon l'une des revendications 1 à 8, **caractérisée en ce que** chaque élément d'articulation (5) est formé d'une seule pièce à partir d'une première matière plastique élastiquement déformable, en particulier est fabriqué par moulage par injection; et **en ce que** les éclisses (2, 3) sont chacune formées d'une seule pièce dans une deuxième matière plastique, en particulier fabriquée par moulage par injection, qui est plus dure que la première matière plastique.

10. Chaîne porte-câbles selon l'une des revendications 1 à 9, **caractérisée en ce que** chaque élément d'articulation (5) a une largeur maximale, notamment au niveau des zones d'extrémité (52) et/ou des zones de fixation (51), qui correspond sensiblement à la largeur maximale des deux éclisses (2, 3) et ne la dépasse pas.

11. Chaîne porte-câbles selon l'une des revendications 1 à 10, **caractérisée en ce que** chaque élément d'articulation (5) présente au moins deux zones de corps en forme de plaque qui sont réalisées avec une épaisseur de matériau nettement plus faible en valeur absolue que la largeur et que la longueur de la zone de corps.

12. Chaîne porte-câbles selon la revendication 6, **caractérisée en ce que** chaque élément d'articulation (5) présente, entre une zone d'extrémité (52) et une zone de fixation (51), une zone de corps en forme de plaque qui agit à la manière d'un ressort à lame élastiquement déformable.

13. Chaîne porte-câbles selon l'une des revendications précédentes, **caractérisée en ce que** dans chaque brin d'éclisses, des éclisses intérieures (2) et des éclisses extérieures (3) différentes alternent dans le sens longitudinal de la chaîne, les éclisses intérieures (2) et les éclisses extérieures (3) étant symétriques par rapport à leur plan médian vertical (S1) perpendiculaire à la direction longitudinale, de sorte que des éclisses intérieures identiques et des éclisses extérieures identiques peuvent être utilisées dans les deux brins d'éclisses, et les éléments d'articulation (5) comportant des zones d'extrémité opposées (52) pour fixer des éclisses intérieures et extérieures (2; 3) dans la direction longitudinale de la chaîne, qui sont réalisées avec une symétrie spéculaire par rapport au plan médian en hauteur (S1).

14. Élément d'articulation (5) destiné à être utilisé dans une chaîne porte-câbles, dans lequel
l'élément d'articulation (5) est déformable élastiquement pour relier entre elles de manière articulée au moins deux éclisses (2, 3) voisines d'une pluralité d'éclisses d'un brin d'éclisses de telle sorte que les éclisses respectivement reliées puissent être coudées l'une par rapport à l'autre dans une direction de coudage;
l'élément d'articulation (5) est réalisé sous la forme d'un composant séparé qui peut être détaché des éclisses (2, 3) d'un brin d'éclisses; et dans lequel
l'élément d'articulation (5) présente une zone de corps en forme de plaque qui agit à la manière d'un ressort à lame élastiquement déformable, afin de permettre une flexion souhaitée de l'élément d'articulation (5),
**caractérisé en ce que**
l'élément d'articulation (5) comprend au moins un premier moyen d'encliquetage (56) destiné à coopérer avec un deuxième moyen d'encliquetage correspondant (36A, 36B) d'une éclisse (2, 3) pour former une liaison par encliquetage (56, 36A, 36B) qui, lorsque la chaîne porte-câbles (1) est assemblée, fixe l'élément d'articulation (5) sur cette éclisse (3) dans une direction transversale à la direction longitudinale de la chaîne porte-câbles (1).

15. Élément d'articulation (5) selon la revendication 14, **caractérisé en ce que**
l'élément d'articulation (5) présente au moins deux zones d'extrémité épaissies (52) qui comprennent chacune un premier moyen d'encliquetage avec un crochet d'encliquetage (56), chaque crochet d'encliquetage (56) étant de préférence formé d'une seule pièce avec l'élément d'articulation (5) par des encoches transversales à la direction longitudinale dans les zones d'extrémité épaissies (52) et présentant un barbillon, et
l'élément d'articulation (5) présente au moins deux zones de fixation (51) qui sont chacune opposées à une zone d'extrémité (52), chaque zone de fixation (51) présentant un épaissement (53) approximativement cylindrique s'étendant transversalement pour la fixation à une deuxième éclisse (2) de deux éclisses voisines (2, 3).

16. Élément d'articulation (5) selon la revendication 15, **caractérisé en ce que** l'élément d'articulation (5) comporte au moins deux zones de corps en forme de plaque, qui agissent chacune à la manière d'un ressort à lame déformé élastiquement et qui sont disposées chacune entre une zone d'extrémité (52) comportant un crochet d'encliquetage (56) et une zone de fixation (51) comportant un épaissement (53), chaque zone de corps ayant une épaisseur de matériau qui est nettement inférieure en valeur absolue à la largeur et à la longueur de la zone de corps.
